# EUROPEAN PATENT SPECIFICATION

(11) **EP 2 679 477 B1**
(45) Date of publication and mention of the grant of the patent: **17.12.2014**
(21) Application number: 13161561.9
(22) Date of filing: 28.03.2013
(51) Int. Cl.: B62K 19/46, B62J 1/12

(54) **Motorcycle**
Motorrad
Motocyclette

(30) Priority: 29.06.2012 JP 2012147618
(43) Date of publication of application: 01.01.2014
(73) Proprietor: Yamaha Hatsudoki Kabushiki Kaisha, Iwata-shi, Shizuoka 438-8501 (JP)
(72) Inventor: Nagaoka, Masaki, Iwata-shi, Shizuoka 438-8501 (JP); Sekiguchi, Takuro, Iwata-shi, Shizuoka 438-8501 (JP); Fukushima, Takaaki, Iwata-shi, Shizuoka 438-8501 (JP)
(74) Representative: Grünecker, Kinkeldey, Stockmair & Schwanhäusser

(56) References cited:
- JP-A- H07 117 753
- JP-A- H07 117 769
- JP-A- 2008 094 396
- JP-U- H02 120 296

## Description

The present invention relates to a motorcycle **according to the preamble of independent claim 1. Such a motorcycle can be taken from the prior art document** JP H02(1990)-120296 U.

Conventionally, what is called an underbone type motorcycle is known. The underbone type motorcycle is equipped with a head pipe for pivotably supporting a handlebar, and a body frame having a main frame extending rearward and obliquely downward from the head pipe, and an engine is disposed below the body frame. In the underbone type motorcycle, the height of the portion between the handlebar and the seat is set low, so that space is formed in front of the seat. As a result, when riding on the motorcycle, the rider can easily straddle over the main frame, so the rider can easily mount on and dismount from the motorcycle.

JP H02(1990)-120296 U discloses a scooter type vehicle in which the periphery of a lower portion of the seat is covered by a vehicle body cover and a storage box disposed in the seat lower portion is interlocked to the vehicle body cover. By interlocking the storage box to the vehicle body cover, the storage box is ensured to have sufficient rigidity. This eliminates the need of, for example, providing the storage box with a reinforcement rib to ensure sufficient rigidity. As a result, the storage box is ensured to have a sufficient volumetric capacity.

However, according to the technology disclosed in the just-mentioned in JP H02(1990)-120296 U , the storage box and the vehicle body cover are interlocked with each other at the front face and both side faces of the storage box, so the seat end portions are located more outward than the portions where the storage box and the vehicle body cover are interlocked. Consequently, the size of the seat becomes larger in terms of vehicle width. As a consequence, the rider ground reach is worsened. In particular, in the underbone type motorcycle, the seat position tends to be at a relatively higher position than that in the scooter type motorcycle because the underbone type motorcycle has such a structure that the storage box, the main frame, and the engine are disposed below the seat. As a consequence, in the underbone type motorcycle, the problem of worsening of the ground reach, which results from the increase of the vehicle-widthwise size of the seat, tends to be more serious.

The present invention has been accomplished in view of the foregoing and other problems, and it is an object of the invention to provide a motorcycle that can ensure the storage box to have a sufficient volumetric capacity in terms of vehicle width and can improve the rider ground reach while at the same time ensuring the storage box to have sufficient rigidity.

According to the present invention said object is solved by a motorcycle having the features of independent claim 1. Preferred embodiments are laid down in the dependent claims.

According to the present teaching it is provided a motorcycle that can ensure the storage box to have a sufficient volumetric capacity in terms of vehicle width and can improve the rider ground reach while at the same time ensuring the storage box to have sufficient rigidity. In particular, it is provided a motorcycle comprising: a head pipe; a body frame having a main frame extending rearward and obliquely downward from the head pipe; an engine supported non-swingably on the main frame and disposed below the main frame; a storage box supported by the body frame and disposed above the main frame and the engine; a seat disposed behind the head pipe and above the storage box; and a vehicle body cover disposed vehicle-widthwise outward of the storage box, wherein: the seat has a protruding portion at least a portion of which is disposed outward of the storage box and the vehicle body cover; the storage box has an opening at its top portion, a wall unit defining the opening, and an interlocking portion connected to the wall unit, the interlocking portion extending outward of the vehicle body cover over an upper edge of the vehicle body cover and interlocking with the upper edge of the vehicle body cover; and the interlocking portion includes left and right first interlocking portions and left and right second interlocking portions, the left and right first interlocking portions formed in a front-half portion of the storage box, and the left and right second interlocking portions formed behind the left and right first interlocking portions and each being a separate portion from the left and right first interlocking portions.

In the motorcycle according to the present teaching, the storage box is ensured to have sufficient rigidity because the storage box can be interlocked to the vehicle body cover using the first and second interlocking portions. In addition, since the interlocking portions are provided only at limited portions of the storage box, the portion of the seat that is located outward of the storage box and the vehicle body cover is prevented from increasing in vehicle-widthwise size. As a result, the ground reach is improved, and the portion of the storage box that is not provided with the interlocking portions can be enlarged outward corresponding to the space for the interlocking portions. As a result, the volumetric capacity of the storage box can be increased.

In one embodiment of the present teaching, the left and right first interlocking portions are formed in the front-half portion of the storage box, and the left and right second interlocking portions are formed in a rear-half portion of the storage box.

This allows the storage box to interlock with the vehicle body cover evenly and ensures the storage box to have sufficient rigidity. In addition, the portion of the storage box that is not provided with the interlocking portions can be enlarged outward corresponding to the space for the interlocking portions. As a result, the volumetric capacity of the storage box can be increased.

In the motorcycle according to the present teaching, the wall unit comprises a front wall, a right wall extending rearward from a rightmost end of the front wall, a left wall extending rearward from a leftmost end of the front wall, and a rear wall connecting the right wall and the left wall to each other; and the left and right first interlocking portions and the left and right second interlocking portions are formed on each of the right wall and the left wall.

Since the storage box is interlocked to the vehicle body cover by the first and second interlocking portions formed on each of the right wall and the left wall, the storage box can be ensured to have sufficient rigidity. In addition, the portion of the storage box that is not provided with the interlocking portions can be enlarged outward corresponding to the space for the interlocking portions. As a result, the volumetric capacity of the storage box can be increased.

In one embodiment of the present teaching, the left wall has a left wall main portion and a left wall bulging portion, the left wall main portion formed to have a horizontal cross section in a linear shape or in a leftward convex curved shape, and the left wall bulging portion provided more rearward than a frontmost end of the left wall main portion and more frontward than a rearmost end thereof and formed to have a horizontal cross section in a leftward convex curved shape having a greater curvature than that of the left wall main portion; and the right wall has a right wall main portion and a right wall bulging portion, the right wall main portion formed to have a horizontal cross section in a linear shape or in a rightward convex curved shape, and the right wall bulging portion provided more rearward than a frontmost end of the right wall main portion and more frontward than a rearmost end thereof and formed to have a horizontal cross section in a rightward convex curved shape having a greater curvature than that of the right wall main portion.

The volumetric capacity of the storage box can be made larger because the left wall bulging portion and the right wall bulging portion, which are respective portions of the left wall and the right wall, bulge vehicle-widthwise outward in this way.

In one embodiment of the present teaching, the left and right first interlocking portions and the left and right second interlocking portions are formed at respective locations on the left wall main portion that are in front of and behind the left wall bulging portion, and also formed at respective locations on the right wall main portion that are in front of and behind the right wall bulging portion.

Thus, the first and second interlocking portions are formed on the left wall main portion and the right wall main portion, not on the left wall bulging portion and the right wall bulging portion, which have a large curvature. As a result, the portion of the seat that is located outward of the storage box and the vehicle body cover is prevented from increasing in vehicle-widthwise size.

In one embodiment of the present teaching, at least one of the left and right first interlocking portions and the left and right second interlocking portions is inclined with respect to the vertical so as to slope downward toward vehicle-widthwise outside.

This makes it easy to mount and interlock the storage box to the vehicle body cover.

In one embodiment of the present teaching, a lowermost end of the protruding portion is disposed lower than the upper edges of the left wall and the right wall of the storage box.

This prevents water from entering the storage box from the sides of the seat more effectively.

In one embodiment of the present teaching, the seat is formed in such a shape that its width becomes narrower toward its front from a portion of the seat at which its width is widest; and a middle position between a frontmost end of the seat and the portion of the seat at which its width is greatest is located behind the left and right first interlocking portions and in front of the left and right second interlocking portions.

When the rider sits on the seat, the rider's legs (thighs) tend to be disposed at portions at which the line containing the middle position and perpendicular to the vehicle center line intersects with the opposite widthwise ends of the seat. However, the first and second interlocking portions are not formed at the locations that are vehicle-widthwise rightward or leftward of the middle position. As a result, the seat is prevented from increasing in vehicle-widthwise size, and the ground reach is improved.

In one embodiment of the present teaching, the motorcycle further comprises: a footrest for a rider's foot to be placed thereon; and wherein: the footrest is disposed more frontward than the frontmost end of the seat and more outward than a vehicle-widthwise leftmost end and a vehicle-widthwise rightmost end of the seat; and the left and right first interlocking portions are formed on a linear line connecting the footrest and the middle position with each other as viewed in plan.

As a result, the seat is prevented from increasing in vehicle-widthwise size, and the ground reach is improved.

As described above, the present teaching makes it possible to provide a motorcycle that can ensure the storage box to have a sufficient volumetric capacity in terms of vehicle width and can improve the rider ground reach while at the same time ensuring the storage box to have sufficient rigidity.

### BRIEF DESCRIPTION OF DRAWINGS

[Fig. 1] Fig. 1 is a left side view illustrating a motorcycle according to one embodiment of the present teaching.
[Fig. 2] Fig. 2 is a plan view illustrating a portion of the motorcycle according to one embodiment of the present teaching.
[Fig. 3A] Fig. 3A is a cross-sectional view taken along line IIIA-IIIA in Fig. 2.
[Fig. 3B] Fig. 3B is a partially enlarged view of Fig. 3A.
[Fig. 4] Fig. 4 is a left side view illustrating a seat, a storage box, and a region therearound, according to one embodiment of the present teaching.
[Fig. 5A] Fig. 5A is a cross-sectional view taken along line VA-VA in Fig. 4, which illustrates the structures of a right wall and a left wall of the storage box.
[Fig. 5B] Fig. 5B is a cross-sectional view taken along line VB-VB in Fig. 4, which illustrates the structures of the right wall and the left wall of the storage box.
[Fig. 5C] Fig. 5C is a cross-sectional view taken along line VC-VC in Fig. 4, which illustrates the structures of the right wall and the left wall of the storage box.
[Fig. 6A] Fig. 6A is a perspective view illustrating a fuel tank according to one embodiment of the present teaching.
[Fig. 6B] Fig. 6B is a side view illustrating the fuel tank according to one embodiment of the present teaching.
[Fig. 6C] Fig. 6C is a plan view illustrating the fuel tank according to one embodiment of the present teaching.
[Fig. 7A] Fig. 7A is a plan view illustrating a storage box according to one embodiment of the present teaching.
[Fig. 7B] Fig. 7B is a left side view illustrating the storage box according to one embodiment of the present teaching.
[Fig. 7C] Fig. 7C is a front view illustrating the storage box according to one embodiment of the present teaching.
[Fig. 7D] Fig. 7D is a rear view illustrating the storage box according to one embodiment of the present teaching.
[Fig. 8] Fig. 8 is a perspective view illustrating a storage box and a region therearound, according to one embodiment of the present teaching.
[Fig. 9] Fig. 9 is a left side view illustrating the storage box and a region therearound, according to one embodiment of the present teaching.
[Fig. 10] Fig. 10 is a perspective view illustrating a storage box and a region therearound, according to one embodiment of the present teaching.
[Fig. 11] Fig. 11 is a perspective view illustrating a storage box, a fuel tank, and a region therearound, according to one embodiment of the present teaching.
[Fig. 12] Fig. 12 is a plan view illustrating a portion of the motorcycle according to another embodiment of the present teaching.
[Fig. 13] Fig. 13 is a cross-sectional view taken along line XIII-XIII in Fig. 12.

### DESCRIPTION OF EMBODIMENTS

### <FIRST EMBODIMENT>

Hereinbelow, one embodiment (the first embodiment) of the present teaching will be described. In the following description, the terms "front," "rear," "left," and "right" respectively refer to front, rear, left, and right of the motorcycle 1 as defined based on the perspective of the rider of the motorcycle 1. Reference characters F, Re, L, and R in the drawings indicate front, rear, left, and right, respectively. The terms "forward," "rearward," "leftward," and "rightward" respectively refer to the direction to the front, the rear, the left (side), and the right (side) of the motorcycle 1 as defined based on the perspective of the rider of the motorcycle 1. The terms "frontmost," and "rearmost," respectively refer to the longest distance in direction to the front or the rear, perpendicular to a plan that extends in width-wise direction of the motorcycle. The terms "leftmost" and "rightmost" respectively refer to the longest distance in direction to the left or the right, perpendicular to a plan that extends in longitudinal center direction of the motorcycle. The term "upward" refer to the vertical direction away from the road on which the motorcycle stands or drives. The term "downward," refer to the vertical direction to the road on which the motorcycle stands or drives. The terms "below", "bottom" and "lower" refers to the downward direction. The terms "above", "upper" and "higher" refers to the upward direction. The term "behind" refers to the rearward direction.

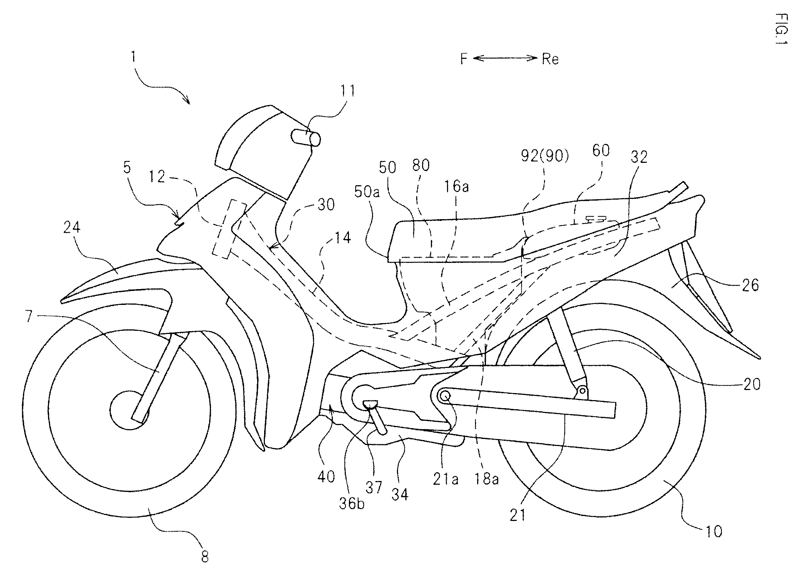

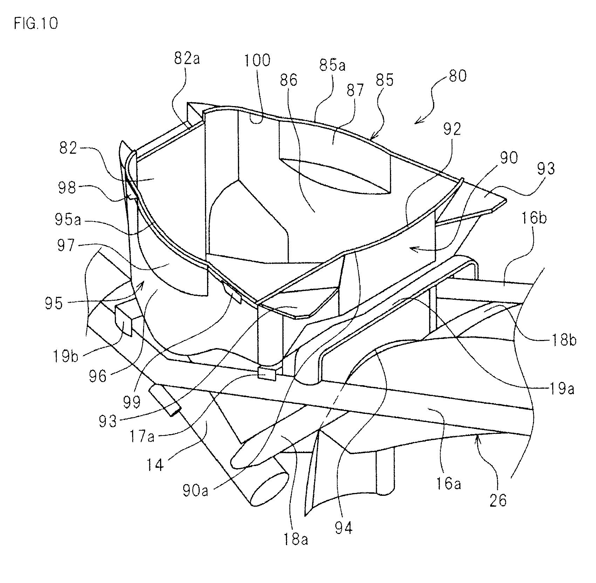

As illustrated in Fig. 1, a motorcycle according to the present embodiment is what is called an underbone type motorcycle 1. The motorcycle 1 has a vehicle body 5, a front wheel 8, a rear wheel 10, and an engine 40 for driving the rear wheel 10. The vehicle body 5 has a head pipe 12, a body frame 30, which comprises a plurality of frame members, and a seat 50, on which the rider is to be seated. The body frame 30 has a main frame 14 extending rearward and obliquely downward from the head pipe 12, a pair of left and right seat frames 16a and 16b (see Fig. 10) extending rearward and obliquely upward from an intermediate portion of the main frame 14, a pair of left and right backstays 18a and 18b (see Fig. 10) disposed at the rear of the seat frames 16a and 16b and extending rearward and obliquely upward from the main frame 14, and cross members 19a and 19b (see Fig. 10) mounted so as to span over the right and left seat frames 16a and 16b. The backstay 18a is connected to a rear end portion of the main frame 14 and an intermediate portion of the seat frame 16a. The backstay 18b is connected to a rear end portion of the main frame 14 and an intermediate portion of the seat frame 16b (see Fig. 10). A vehicle body cover 32 is mounted above and vehicle-widthwise outward of the body frame 30. The engine 40 is disposed below the main frame 14 and is supported non-swingably by the main frame 14. The seat 50 is supported by the seat frames 16a and 16b of the body frame 30.

A steering shaft, which is not shown in the drawings, is supported on the head pipe 12, and a handlebar 11 is provided on an upper portion of the steering shaft. A front fork 7 is provided on a lower portion of the steering shaft. A front wheel 8 is supported rotatably at the lower end of the front fork 7.

A rear cushion unit 20 is disposed below the seat frame 16a. An upper end portion of the rear cushion unit 20 is supported on the seat frame 16a, and a lower end portion of the rear cushion unit 20 is supported on a rear arm 21. A pivot shaft 21 a is provided in a front portion of the rear arm 21. The rear arm 21 can swing up and down about the pivot shaft 21 a. The rear wheel 10 is supported at a rear portion of the rear arm 21.

The motorcycle 1 has a front fender 24 disposed above a portion of the front wheel 8, and a rear fender 26 disposed above a portion of the rear wheel 10. The front fender 24 covers a portion of the front wheel 8. The rear fender 26 covers a portion of the rear wheel 10.

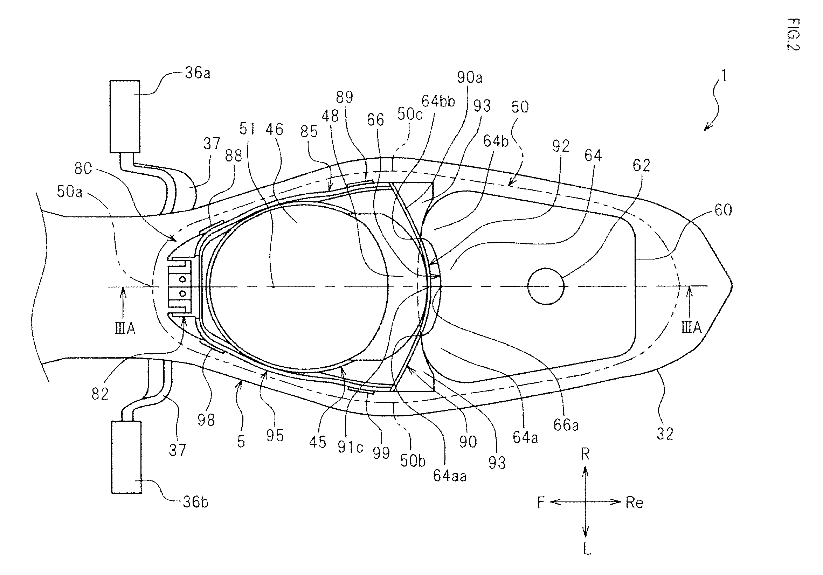

The engine 40 has a crankcase 34. A pair of left and right footrests 36a and 36b (see Fig. 2), on which the feet of the rider are put, are disposed to the left and right of the crankcase 34. The footrests 36a and 36b are fitted to the crankcase 34 via joining rods 37. As illustrated in Fig. 2, the footrests 36a and 36b are disposed more rearward than the head pipe 12 and more frontward than a frontmost end 50a of the seat 50. The footrest 36a is disposed vehicle-widthwise more rightward than a rightmost end 50c of the seat 50. The footrest 36b is disposed vehicle-widthwise more leftward than a leftmost end 50b of the seat 50.

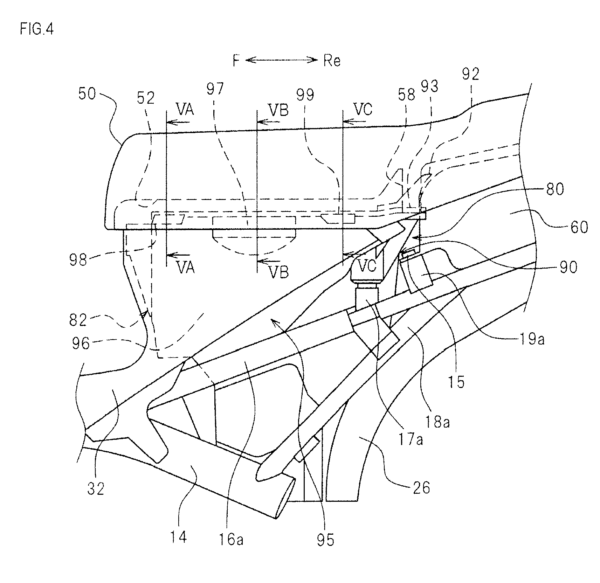

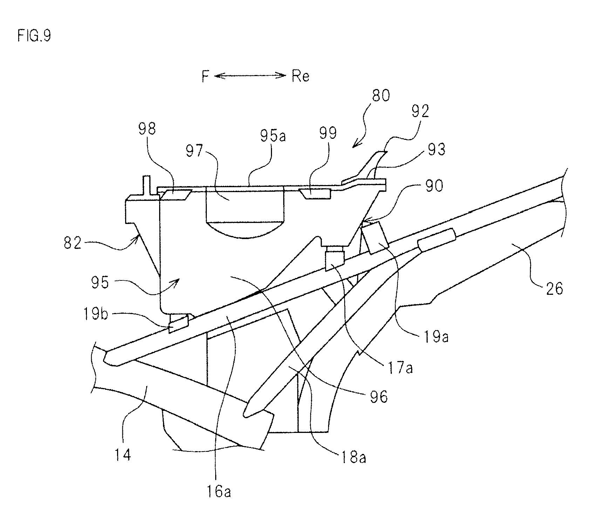

As illustrated in Fig. 1, a storage box 80 is disposed below the seat 50 and above the engine 40. As illustrated in Fig. 4, at least a portion of the storage box 80 is disposed between the seat 50 and the main frame 14. As illustrated in Fig. 10, the storage box 80 is supported on the cross members 19a and 19b. As illustrated in Fig. 9, the storage box 80 is fitted to a bracket 17a provided on the left seat frame 16a, a bracket (not shown) provided on the right seat frame 16b, and the cross member 19b, using bolts and nuts (not shown).

As illustrated in Fig. 1, a fuel tank 60 is disposed below the seat 50 and at the rear of the storage box 80. The rear wheel 10, which is supported on the rear arm 21, is disposed below the fuel tank 60. As illustrated in Fig. 4, the fuel tank 60 is fitted to the cross member 19a with the use of a bolt 15 and a nut, which is not shown. The bracket 17a is disposed in front of the cross member 19a. The mounting position of the storage box 80 and the mounting position of the fuel tank 60 are staggered from each other in a fore-and-aft direction of the motorcycle 1. The bracket 17a constitutes a first mount portion. The portion of the cross member 19a to which the fuel tank 60 is fitted constitutes a second mount portion. The first mount portion is positioned more frontward than the second mount portion.

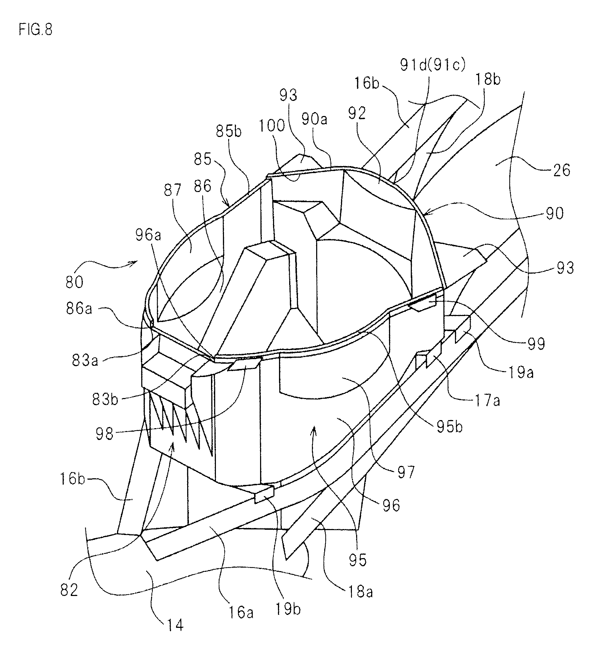

The seat 50 is configured to be pivotable about the front end portion of the seat 50. When the seat 50 is pivoted so that the rear end portion of the seat 50 moves frontward and obliquely upward, a later-described opening 100 (see Fig. 8) of the storage box 80 is exposed outside. The seat 50 is formed in such a shape that its width becomes narrower toward the front from the portion of the seat 50 at which its width is widest. The seat 50 is formed in such a shape that its width becomes narrower toward the rear from the portion of the seat 50 at which its width is widest. In the present embodiment, the portion of the seat 50 at which its width is widest is the portion connecting the rightmost end 50c and the leftmost end 50b of the seat 50 to each other.

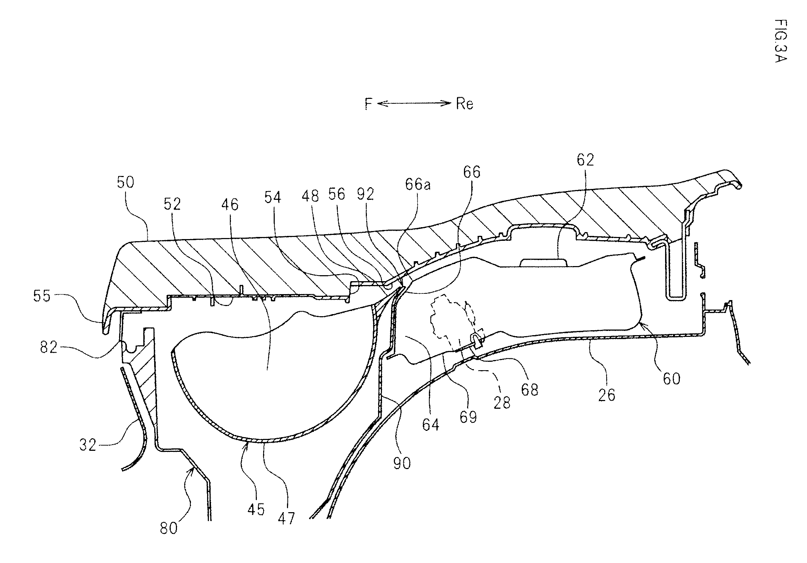

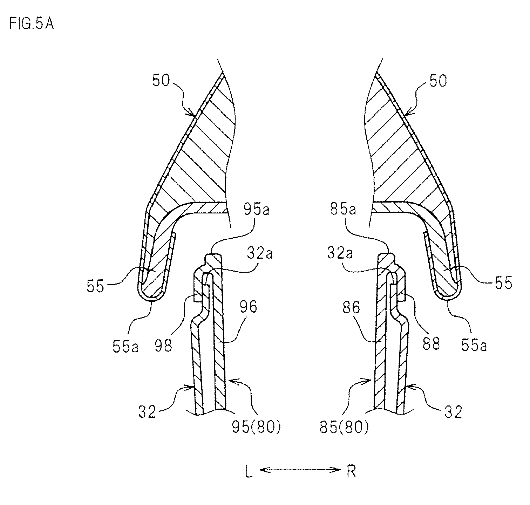

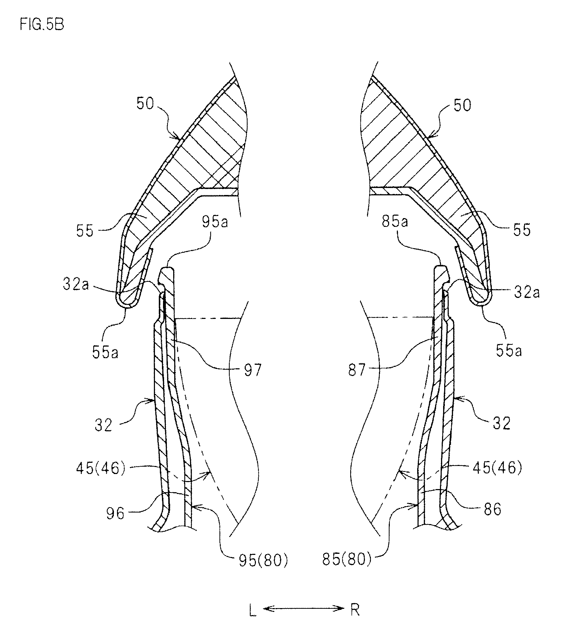

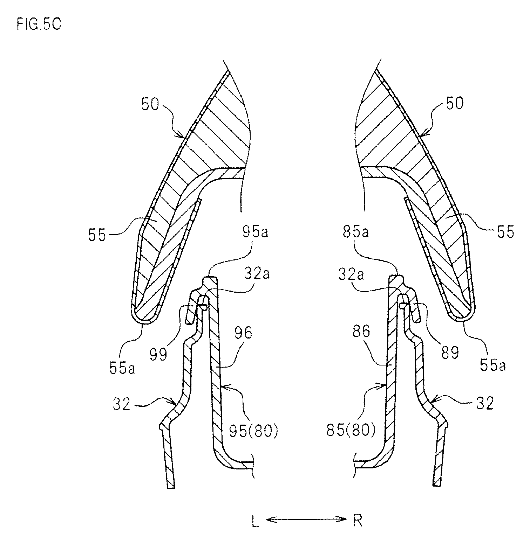

As illustrated in Fig. 3A, the seat 50 has a protruding portion 55 protruding downward from a reverse face 52 of the seat 50. The protruding portion 55 is formed along the entire circumference of the reverse face 52 of the seat 50. As illustrated in Fig. 5B, at least a portion of the protruding portion 55 is disposed outward of the storage box 80 and the vehicle body cover 32. The term "outward" herein means vehicle-widthwise outward. This applies throughout the following description unless otherwise stated. As illustrated in Fig. 5A, the lower end 55a of the protruding portion 55 is disposed lower than an upper edge 85a of a right wall 85 of the storage box 80. The lower end 55a of the protruding portion 55 is also disposed lower than an upper edge 95a of a left wall 95 of the storage box 80. As illustrated in Fig. 5C, the protruding portion 55 overlaps the upper edge 85a of the right wall 85 and an upper edge 32a of the vehicle body cover 32 as viewed from one side of the vehicle (viewed in the direction from the right to the left of Fig. 5C). The protruding portion 55 overlaps the upper edge 95a of the left wall 95 and the upper edge 32a of the vehicle body cover 32 as viewed from the other side of the vehicle (viewed in the direction from the left to the right of Fig. 5C).

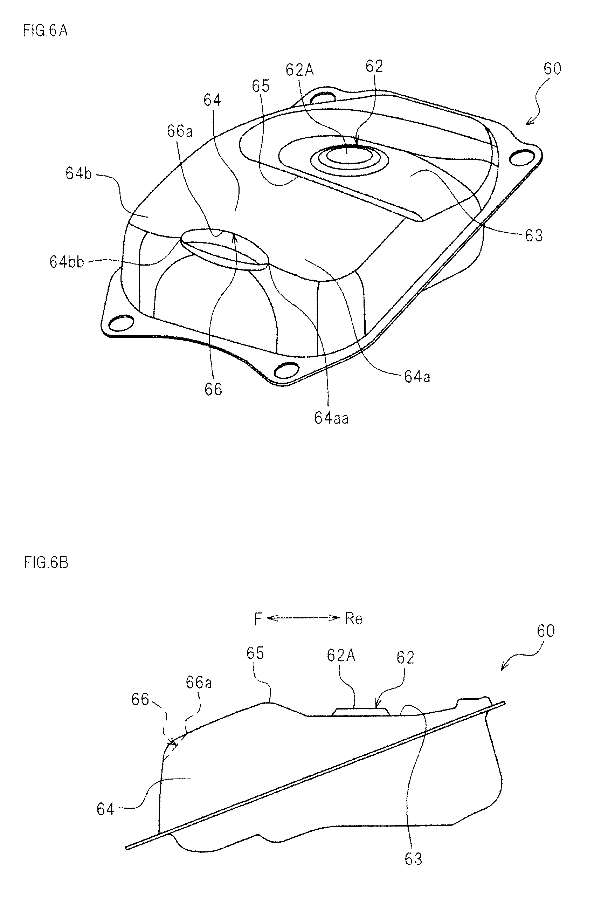

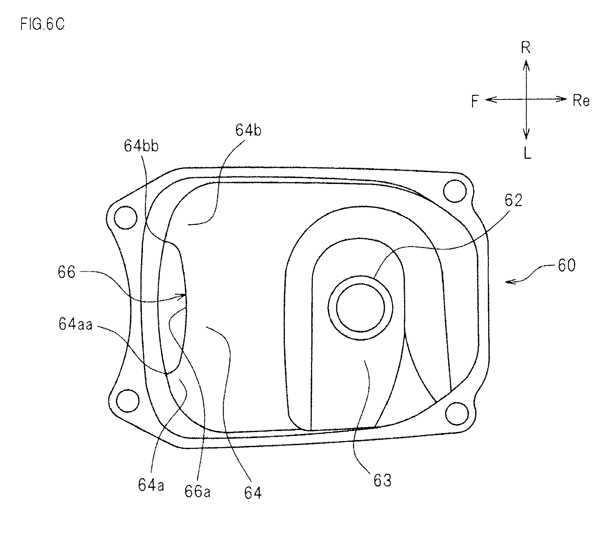

As illustrated in Fig. 6C, a recessed portion 66 recessed rearward is formed in a vehicle-widthwise central region (e.g., at the vehicle-widthwise center) in an upper portion of a front end portion 64 of the fuel tank 60. The front end portion 64 of the fuel tank 60 includes a leftward positioned portion 64a and a rightward positioned portion 64b. The leftward positioned portion 64a is positioned vehicle-widthwise leftward of the recessed portion 66. The rightward positioned portion 64b is positioned vehicle-widthwise rightward of the recessed portion 66. The leftward positioned portion 64a has a frontmost end 64aa. The rightward positioned portion 64b has a frontmost end64bb. The frontmost end 64aa is positioned more frontward than a rearmost end 66a of the recessed portion 66. The frontmost end 64bb is positioned more frontward than the rearmost end 66a of the recessed portion 66. As illustrated in Fig. 3A, the surface of the recessed portion 66 is inclined with respect to the vertical so as to slope upward toward the rear.

As illustrated in Fig. 6A, a tank cap 62 is provided on an upper portion of the fuel tank 60, rearward of the front end portion 64 of the fuel tank 60. The tank cap 62 covers a fuel inlet, not shown in the drawings, so that it can be opened/closed. As illustrated in Fig. 2, the tank cap 62 is disposed at a vehicle-widthwise central region. As viewed in plan, the vehicle center line overlaps the tank cap 62. As illustrated in Fig. 6B, an uppermost end 65 of the front end portion 64 of the fuel tank 60 is positioned higher than a surface 63 on which the tank cap 62 is provided. The uppermost end 65 of the front end portion 64 is positioned higher than an uppermost end 62A of the tank cap 62. As illustrated in Fig. 3A, an opening 68 is formed in a lower portion of the fuel tank 60. A fuel pump 28 is inserted in the opening 68 from below. The fuel pump 28 is mounted to a lower wall 69 of the fuel tank 60 and is disposed inside the fuel tank 60. A gap is provided between the upper wall of the fuel tank 60 and the uppermost end of the fuel pump 28. The fuel pump 28 is disposed inside the front-half portion of the fuel tank 60. The fuel pump 28 is inclined so as to slope forward toward the top. The recessed portion 66 is disposed more frontward than the fuel pump 28. The rearmost end 66a of the recessed portion 66 is positioned more frontward than the frontmost end of the fuel pump 28.

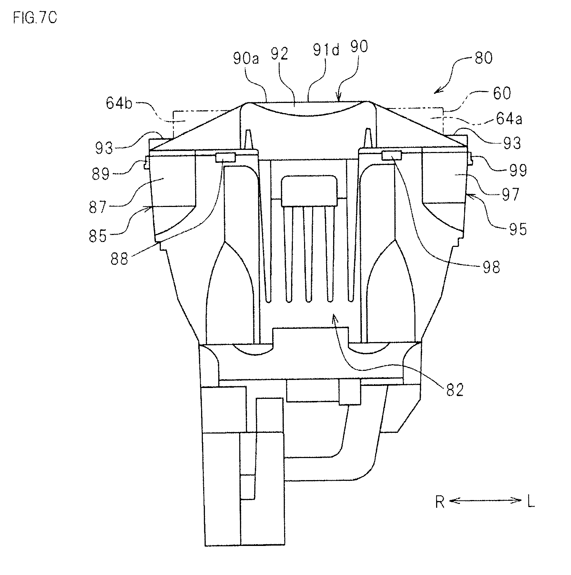

At least a portion of the front end portion 64 of the fuel tank 60 is positioned higher than a later-described rear wall 90 of the storage box 80. That is, in the present embodiment, the recessed portion 66 is a portion of the front end portion 64 of the fuel tank 60, but a front portion of the recessed portion 66 is positioned lower than the uppermost end of the rear wall 90 of the storage box 80, as illustrated in Fig. 3A. However, of the front end portion 64 of the fuel tank 60, at least a portion of the leftward positioned portion 64a, which is positioned vehicle-widthwise leftward of the recessed portion 66, and at least a portion of the rightward positioned portion 64b, which is positioned vehicle-widthwise rightward of the recessed portion 66, are positioned higher than the rear wall 90 of the storage box 80 (see Fig. 7C).

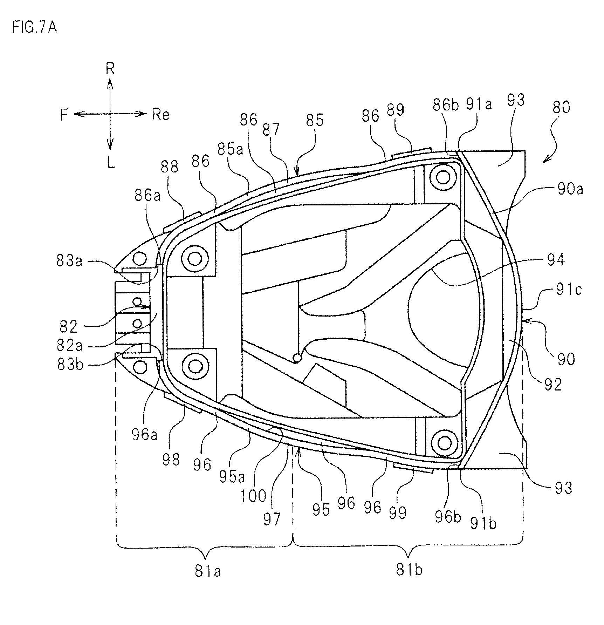

As illustrated in Fig. 7A, the storage box 80 has a front wall 82, a right wall 85 extending rearward from a rightmost end 83a of the front wall 82, a left wall 95 extending rearward from a leftmost end 83b of the front wall 82, and a rear wall 90 connecting the right wall 85 and the left wall 95 to each other. It should be noted that the phrase "extending rearward" here is intended to mean not just the cases in which a part or component extends rearward in a fore-and-aft direction in a strict sense but also the cases in which a part or component extends rearward in a direction inclined from the fore-and-aft direction. Moreover, it is not limited to the cases in which a part or component extends rearward straightly but also means to include the cases in which a part or component extends rearward forming a curve. The front wall 82, the right wall 85, the left wall 95, and the rear wall 90 constitute a wall unit of the storage box 80. In the storage box 80, an opening 100 is formed by the upper edge 82a of the front wall 82, the upper edge 85a of the right wall 85, the upper edge 90a of the rear wall 90, and the upper edge 95a of the left wall 95.

A rightmost end 91a of the rear wall 90 is positioned more rightward than the rightmost end 83a of the front wall 82. A leftmost end 91 b of the rear wall 90 is positioned more leftward than the leftmost end 83b of the front wall 82. The width (vehicle-widthwise length) of the rear wall 90 is longer than the width (vehicle-widthwise length) of the front wall 82.

As illustrated in Fig. 7A, the left wall 95 has a left wall main portion 96 and a left wall bulging portion 97. The left wall main portion 96 is formed to have a horizontal cross section in a leftward convex curved shape. The left wall bulging portion 97 is provided more rearward than the frontmost end 96a of the left wall main portion 96 and more frontward than the rearmost end 96b thereof. The left wall bulging portion 97 is formed to have a horizontal cross section in a leftward convex curved shape having a greater curvature than that of the left wall main portion 96. As illustrated in Fig. 5B, the curvature of the left wall bulging portion 97 is greater than the curvature of the left wall main portion 96. The left wall bulging portion 97 is positioned more outward than the left wall main portion 96. In the present embodiment, in a vehicle fore-and-aft central portion of the left wall 95, the left wall bulging portion 97 is provided in an upper portion of the left wall 95, and the left wall main portion 96 is provided in a lower portion of the left wall 95, as illustrated in Fig. 8. In the vehicle fore-and-aft central portion of the left wall 95, the left wall bulging portion 97 curves more leftward than the left wall main portion 96. Since the left wall bulging portion 97 does not have a later-described first interlocking portion 98 or a later-described second interlocking portion 99, the internal space can be enlarged leftward corresponding to the space for these interlocking portions 98 and 99. Thus, the vehicle-widthwise volumetric capacity of the storage box 80 can be increased.

As illustrated in Fig. 7A, the right wall 85 has a right wall main portion 86 and a right wall bulging portion 87. The right wall main portion 86 is formed to have a horizontal cross section in a rightward convex curved shape. The right wall bulging portion 87 is provided more rearward than the frontmost end 86a of the right wall main portion 86 and more frontward than the rearmost end 86b thereof. The right wall bulging portion 87 is formed to have a horizontal cross section in a rightward convex curved shape having a greater curvature than that of the right wall main portion 86. As illustrated in Fig. 5B, the curvature of the right wall bulging portion 87 is greater than the curvature of the right wall main portion 86. The right wall bulging portion 87 is positioned more outward than the right wall main portion 86. In the present embodiment, in a vehicle fore-and-aft central portion of the right wall 85, the right wall bulging portion 87 is provided in an upper portion of the right wall 85, and the right wall main portion 86 is provided in a lower portion of the right wall 85, as illustrated in Fig. 8. In the vehicle fore-and-aft central portion of the right wall 85, the right wall bulging portion 87 curves more rightward than the right wall main portion 86. Since the right wall bulging portion 87 does not have a later-described first interlocking portion 88 (see Fig. 7A) or a later-described second interlocking portion 89 (see Fig. 7A), the internal space can be enlarged rightward corresponding to the space for these interlocking portions 88 and 89. Thus, the vehicle-widthwise volumetric capacity of the storage box 80 can be increased. It should be noted that the left wall main portion 96 and the right wall main portion 86 may have a horizontal cross-section in a linear shape. In that case, the curvature of each of the left wall main portion 96 and the right wall main portion 86 is zero.

As illustrated in Fig. 7A, the upper edge 90a of the rear wall 90 of the present embodiment is formed in a circular arc shape, as viewed in plan. The upper edge 90a of the rear wall 90 curves toward the rear of the vehicle. The rearmost end 91 c of the rear wall 90 is disposed more rearward than the rearmost end 86b of the right wall 85 and the rearmost end 96b of the left wall 95. As illustrated in Fig. 2, the rearmost end 91 c of the rear wall 90 is disposed more rearward than the respective frontmost ends 64aa and 64bb of the leftward and rightward positioned portions 64a and 64b, which are respectively positioned vehicle-widthwise leftward and rightward of the recessed portion 66. The rearmost end 91 c of the rear wall 90 is disposed in the recessed portion 66.

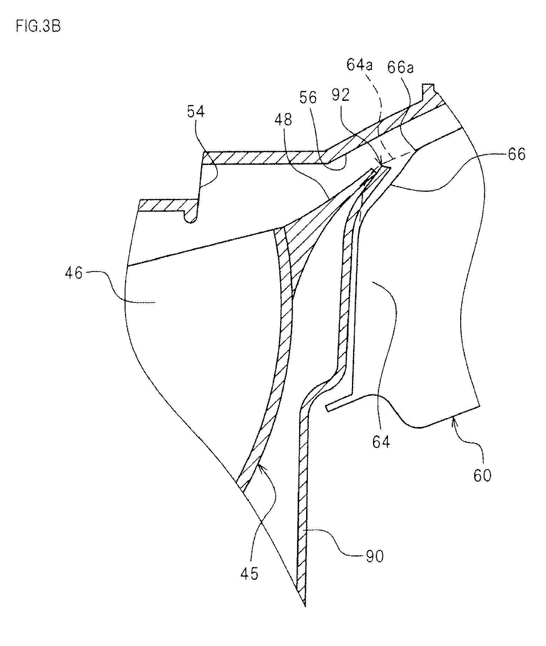

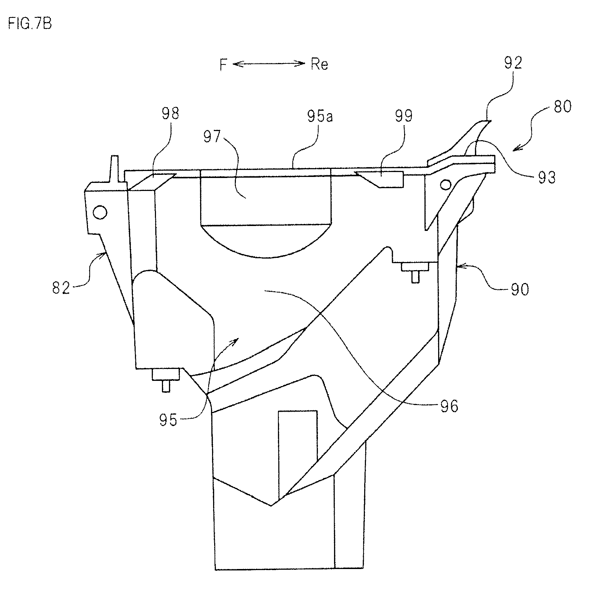

As illustrated in Fig. 7B, the rear wall 90 has a flange portion 92 extending rearward and obliquely upward. The flange portion 92 forms at least a portion of the upper portion of the rear wall 90. The flange portion 92 is inclined with respect to the vertical so as to slope upward toward the rear. As illustrated in Fig. 8, the uppermost end 91d of the rear wall 90 is positioned higher than the uppermost end 85b of the right wall 85 and the uppermost end 95b of the left wall 95. In the present embodiment, the uppermost end 91d of the rear wall 90 is also the uppermost end 91d of the flange portion 92. The upper edge 90a of the rear wall 90 is formed so as to slope downward from the uppermost end 91d of the rear wall 90 toward the uppermost end 85b of the right wall 85 and the uppermost end 95b of the left wall 95. As illustrated in Fig. 2, at least a portion of the flange portion 92 is disposed more rearward than the respective frontmost ends 64aa and 64bb of the leftward and rightward positioned portions 64a and 64b, which are respectively positioned vehicle-widthwise leftward and rightward of the recessed portion 66. As illustrated in Fig. 2, at least a portion of the flange portion 92 is disposed in the recessed portion 66, and it overlaps the fuel tank 60, as viewed in plan. As illustrated in Fig. 3B, the leftward positioned portion 64a and the rightward positioned portion 64b of the front end portion 64 of the fuel tank 60 overlap a portion of the flange portion 92 of the rear wall 90, as viewed from one side of the vehicle.

As illustrated in Fig. 7A, the storage box 80 has a seat load bearing portion 93 extending rearward from the rear wall 90. The seat load bearing portion 93 supports the load applied from the seat 50 when the seat 50 is closed. As illustrated in Fig. 7B, the seat load bearing portion 93 is disposed at a position higher than the upper edge 95a of the left wall 95. As illustrated in Fig. 4, the seat load bearing portion 93 is disposed above the region at which the fuel tank 60 is fitted to the cross member 19a. A protruding portion 58 protruding downward from the reverse face 52 of the seat 50 is supported by the seat load bearing portion 93.

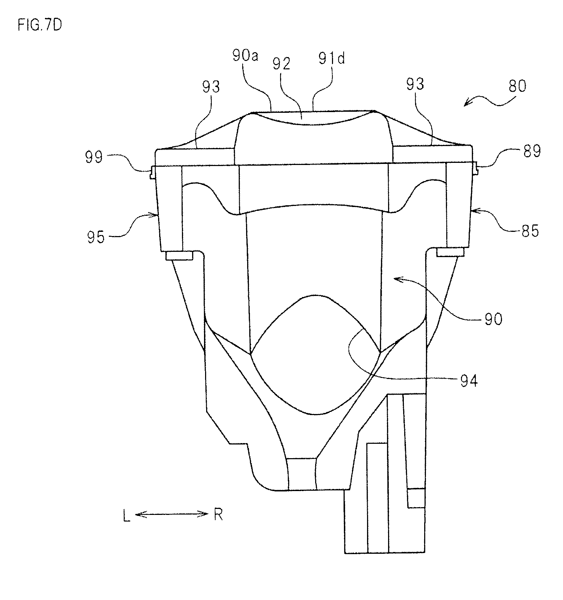

As illustrated in Fig. 7D, a recessed portion 94 recessed upward, which is positioned above a portion of the rear fender 26 (see Fig. 10), is formed in a lower portion of the rear wall 90 of the storage box 80. As illustrated in Fig. 10, a portion of the rear fender 26 is disposed in the recessed portion 94. As illustrated in Fig. 9, a portion of the rear fender 26 overlaps the storage box 80 as viewed from one side of the vehicle.

As illustrated in Fig. 7A, the storage box 80 has a first interlocking portion 88 and a second interlocking portion 89 that are connected to the right wall 85, and a first interlocking portion 98 and a second interlocking portion 99 that are connected to the left wall 95. In the present embodiment, the first interlocking portion 88 of the right wall 85 and the first interlocking portion 98 of the left wall 95 have the same shape as each other, and the second interlocking portion 89 of the right wall 85 and the second interlocking portion 99 of the left wall 95 have the same shape as each other, but the teaching is not limited to such a configuration. Hereinbelow, the first interlocking portion 88 and the second interlocking portion 89 of the right wall 85 will be described, and the description of the first interlocking portion 98 and the second interlocking portion 99 of the left wall 95 will be omitted.

As illustrated in Fig. 5A, the first interlocking portion 88 connected to the right wall 85 passes over the upper edge 32a of the vehicle body cover 32 and extends outward of the vehicle body cover 32, interlocking with the upper edge 32a of the vehicle body cover 32. The first interlocking portion 88 extends vertically downward.

As illustrated in Fig. 5C, the second interlocking portion 89 connected to the right wall 85 passes over the upper edge 32a of the vehicle body cover 32 and extends outward of the vehicle body cover 32, interlocking with the upper edge 32a of the vehicle body cover 32. The second interlocking portion 89 is inclined with respect to the vertical so as to slope downward more toward vehicle-widthwise outside. It should be noted that both the first interlocking portion 88 and the second interlocking portion 89 may extend vertically downward, or both of them may be inclined with respect to the vertical so as to slope downward more toward vehicle-widthwise outside. It is also possible that, as in the present embodiment, either one of them may extend vertically downward, and the other one may be inclined with respect to the vertical so as to slope downward more toward vehicle-widthwise outside.

As illustrated in Fig. 7A, the first interlocking portion 88 is formed in the front-half portion 81 a of the storage box 80. The second interlocking portion 89 is formed behind the first interlocking portion 88. The second interlocking portion 89 is a separate portion from the first interlocking portion 88, and the second interlocking portion 89 is not connected to the first interlocking portion 88. In the present embodiment, the second interlocking portion 89 is formed in a rear-half portion 81 b of the storage box 80. The first interlocking portion 88 and the second interlocking portion 89 are formed in the right wall main portion 86, positioned respectively in front of and behind the right wall bulging portion 87. The first interlocking portion 98 and the second interlocking portion 99 are formed in the left wall main portion 96, positioned respectively in front of and behind the left wall bulging portion 97. As illustrated in Fig. 2, the middle position 51, which is between the frontmost end 50a of the seat 50 and the portion of the seat 50 at which its width is greatest, is located behind the first interlocking portions 88 and 98 and in front of the second interlocking portions 89 and 99. The first interlocking portion 88 is formed on the linear line connecting the footrest 36a and the middle position 51 with each other, as viewed in plan. The first interlocking portion 98 is formed on the linear line connecting the footrest 36b and the middle position 51 with each other, as viewed in plan. The second interlocking portion 89 is formed more frontward than the rightmost end 50c of the seat 50. The second interlocking portion 99 is formed more frontward than the rightmost end 50c of the seat 50.

As illustrated in Fig. 3A, an indented portion 54 recessed upward is formed in a region of the reverse face 52 of the seat 50 that faces the rear wall 90 and the recessed portion 66. The indented portion 54 in the present embodiment is a stepped portion that is formed by the reverse face 52 of the seat 50 located in front of the recessed portion 66 so as to be recessed upward. The indented portion 54 is positioned higher than the reverse face 52 of the seat 50 that is disposed above the front-half portion of the storage box 80, and the region in which the indented portion 54 is formed has a wider clearance from the storage box 80 than the region in which the indented portion 54 is not formed. Since the indented portion 54 is formed in the reverse face 52 of the seat 50 in this way, sufficient storage space can be ensured in front of the recessed portion 66. Within the reverse face 52 of the seat 50, an indented portion 56 that is recessed further upward than the indented portion 54 is formed behind the indented portion 54 and above the recessed portion 66 of the fuel tank 60. A gap is provided between the indented portion 56 and the recessed portion 66. Since the indented portion 56 is formed in the reverse face 52 of the seat 50 in this way, sufficient storage space can be ensured in a region above the recessed portion 66.

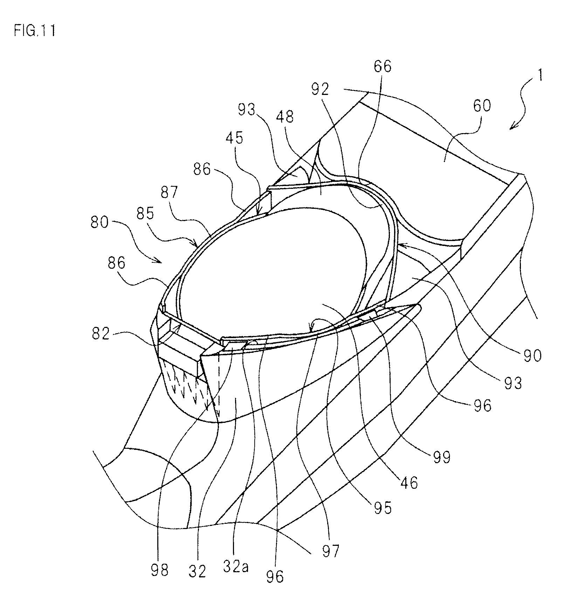

As illustrated in Fig. 11, in the storage box 80 of the present embodiment, the left wall 95 has the left wall bulging portion 97, which has a greater curvature in horizontal cross-section than the left wall main portion 96, and the right wall 85 has the right wall bulging portion 87, which has a greater curvature in horizontal cross-section than the right wall main portion 86. As a result, the volumetric capacity of the storage box 80 is made large. This enables the storage box 80 to accommodate a helmet 45, for example. An example of the helmet 45 is an open-face type helmet provided with a peak 48 on a shell portion 46. As illustrated in Fig. 3A, in the present embodiment, the helmet 45 can be accommodated in the storage box 80 in such a posture that a top portion 47 of the shell portion 46 of the helmet 45 faces downward and the peak 48 of the helmet 45 faces rearward. The peak 48 of the helmet 45 is placed along the flange portion 92 of the rear wall 90. As illustrated in Fig. 2, at least a portion of the peak 48 of the helmet 45 overlaps the recessed portion 66 of the fuel tank 60 as viewed in plan. In other words, at least a portion of the peak 48 of the helmet 45 is disposed above the recessed portion 66 of the fuel tank 60. As illustrated in Fig. 3B, the leftward positioned portion 64a and the rightward positioned portion 64b of the front end portion 64 of the fuel tank 60 overlap a portion of the peak 48 of helmet 45, as viewed from one side of the vehicle.

### <SECOND EMBODIMENT>

In the foregoing embodiment, the upper edge 90a of the rear wall 90 of the storage box 80 is formed in a circular arc shape as viewed in plan, but the teaching is not limited to such an embodiment. Hereinbelow, a storage box 180 according to a second embodiment will be described.

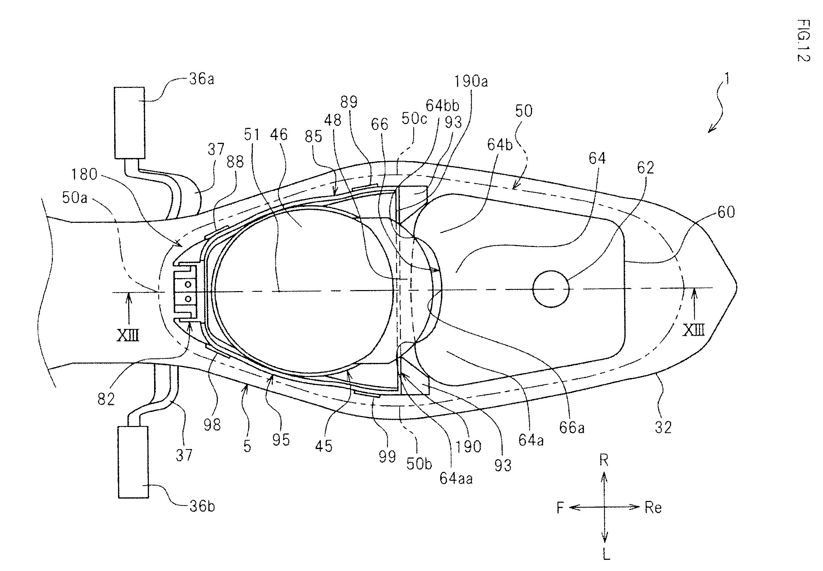

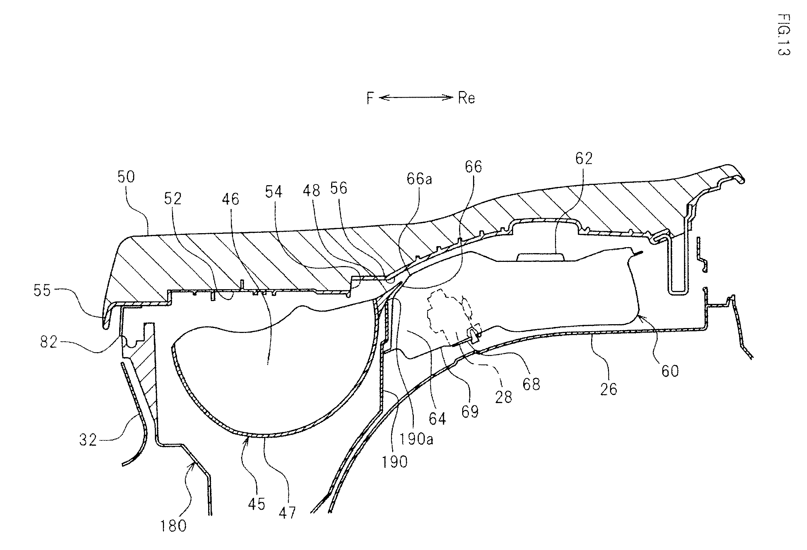

As illustrated in Fig. 12, an upper edge 190a of a rear wall 190 of the storage box 180 according to the present embodiment is formed in a linear shape as viewed in plan. The upper edge 190a extends horizontally (in a vehicle width direction) as viewed in plan. As illustrated in Fig. 13, the storage box 180 has a volumetric capacity that can accommodate the helmet 45 or the like. In the present embodiment, the helmet 45 can be accommodated in the storage box 180 in such a posture that the top portion 47 of the shell portion 46 of the helmet 45 faces downward and the peak 48 of the helmet 45 faces rearward. A portion of the peak 48 of the helmet 45 is placed at the rear of the storage box 180 over the upper edge 190a of the rear wall 190. As illustrated in Fig. 12, at least a portion of the peak 48 of the helmet 45 overlaps the recessed portion 66 of the fuel tank 60 as viewed in plan. In other words, at least a portion of the peak 48 of the helmet 45 is disposed above the recessed portion 66 of the fuel tank 60. The rest of the configuration is substantially the same as the configuration in the first embodiment.

As described previously, in the motorcycle 1 according to the embodiments, the seat 50 has the protruding portion 55 at least a portion of which is disposed outward of the storage box 80 and the vehicle body cover 32. The storage box 80 has the opening 100 at its top portion. The storage box 80 also has the front wall 82, the right wall 85, the rear wall 90, and the left wall 95, which define the opening 100. The storage box 80 also has an interlocking portion connected to the right wall 85 and the left wall 95. The interlocking portion extends outward of the vehicle body cover 32 over the upper edge 32a of the vehicle body cover 32 and interlocks with the upper edge 32a the vehicle body cover32. The interlocking portion includes the first interlocking portions 88 and 98 and the second interlocking portions 89 and 99. The first interlocking portions 88 and 98 are formed in the front-half portion 81 a of the storage box80. Each of the second interlocking portions 89 and 99 is a separate portion from the first interlocking portions 88 and 98. The second interlocking portions 89 and 99 are formed behind the first interlocking portion, and each of the second interlocking portions 89 and 99 is a separate portion from the first interlocking portions 88 and 98. Thereby, the storage box 80 can be interlocked to the vehicle body cover 32 by the first interlocking portions 88 and 98 and the second interlocking portions 89 and 99. As a result, the storage box 80 can be ensured to have sufficient rigidity. In addition, since the interlocking portions 88, 89, 98, and 99 are provided only at limited portions of the storage box 80, the portion of the seat 50 that is located outward of the storage box 80 and the vehicle body cover 32 is prevented from increasing in vehicle-widthwise size. As a result, the ground reach is improved, and the portion of the storage box 80 that is not provided with the interlocking portions 88, 89, 98, and 99 can be enlarged outward corresponding to the space for the interlocking portions 88, 89, 98, and 99. As a result, the volumetric capacity of the storage box 80 can be increased.

In the embodiments, the first interlocking portions 88 and 98 are formed in the front-half portion 81 a of the storage box 80, and the second interlocking portions 89 and 99 are formed in the rear-half portion 81 b of the storage box 80. This allows the storage box 80 to interlock with the vehicle body cover 32 evenly and ensures the storage box 80 to have sufficient rigidity. In addition, the portion of the storage box 80 that is not provided with the interlocking portions 88, 89, 98, and 99 can be enlarged outward corresponding to the space for the interlocking portions 88, 89, 98, and 99. As a result, the volumetric capacity of the storage box 80 can be increased.

In the embodiments, the wall unit comprises the front wall 82, the right wall 85 extending rearward from the rightmost end of the front wall 82, the left wall 95 extending rearward from the leftmost end of the front wall 82, and the rear wall 90 connecting the right wall 85 and the left wall 95, and the first interlocking portions 88 and 98 and the second interlocking portions 98 and 99 are formed on each of the right wall 85 and the left wall 99. Since the storage box 80 is interlocked to the vehicle body cover 32 by the first interlocking portions 88 and 98 and the second interlocking portions 89 and 99, formed on the right wall 85 and the left wall 95, the storage box 80 can be ensured to have sufficient rigidity. In addition, the portion of the storage box 80 that is not provided with the interlocking portions 88, 89, 98, and 99 can be enlarged outward corresponding to the space for the interlocking portions 88, 89, 98, and 99. As a result, the volumetric capacity of the storage box 80 can be increased.

In the embodiments, the left wall 95 has the left wall main portion 96 and the left wall bulging portion 97, the left wall main portion 96 formed to have a horizontal cross section in a linear shape or in a leftward convex curved shape, and the left wall bulging portion 97 provided more rearward than the frontmost end 96a of the left wall main portion 96 and more frontward than the rearmost end 96b thereof and formed to have a horizontal cross section in a leftward convex curved shape having a greater curvature than that of the left wall main portion 96, and the right wall 85 has the right wall main portion 86 and the right wall bulging portion 87, the right wall main portion 86 formed to have a horizontal cross section in a linear shape or in a rightward convex curved shape, and the right wall bulging portion provided more rearward than the frontmost end 86a of the right wall main portion 87 and more frontward than the rearmost end 86b thereof and formed to have a horizontal cross section in a rightward convex curved shape having a greater curvature than that of the right wall main portion 86. The volumetric capacity of the storage box 80 can be made larger because the left wall bulging portion 97 and the right wall bulging portion 87, which are respective portions of the left wall 95 and the right wall 85, bulge vehicle-widthwise outward in this way.

In the embodiments, the first interlocking portion 98 and the second interlocking portion 99 are formed at respective locations on the left wall main portion 96 that are in front of and behind the left wall bulging portion 97, and the first interlocking portion 88 and the second interlocking portion 89 are formed at respective locations on the right wall main portion 86 that is in front of the right wall bulging portion 87 and behind the right wall bulging portion 87. Thus, the first interlocking portions 88 and 98 and the second interlocking portions 89 and 99 are formed on the left wall main portion 96 and the right wall main portion 86, not on the left wall bulging portion 97 and the right wall bulging portion 87, which have a large curvature. As a result, the portion of the seat 50 that is located outward of the storage box 80 and the vehicle body cover 32 is prevented from increasing in vehicle-widthwise size.

In the embodiments, the second interlocking portions 89 and 99 are inclined with respect to the vertical so as to slope downward more toward vehicle-widthwise outside. This makes it easy to mount and interlock the storage box 80 to the vehicle body cover 32.

In the embodiments, the lowermost end 55a of the protruding portion 55 is disposed lower than the upper edge 95a of the left wall 95 and the upper edge 85a the right wall 85 of the storage box 80. This prevents water from entering the storage box 80 from the sides of the seat 50 more effectively.

In the embodiments, the seat 50 is formed in such a shape that its width becomes narrower toward its front from the portion of the seat 50 at which its width is widest, and the middle position 51 between the frontmost end 50a of the seat 50 and the portion of the seat 50 at which its width is greatest is located behind the first interlocking portions 88 and 98 and in front of the second interlocking portions 89 and 99. When the rider sits on the seat 50, the rider's legs (thighs) tend to be disposed at portions at which the line containing the middle position 51 and being perpendicular to the vehicle center line intersects with the opposite widthwise ends of the seat 50. However, the first interlocking portions 88 and 98 and the second interlocking portions 89 and 99 are not formed at the locations that are vehicle-widthwise rightward or leftward of the middle position 51. As a result, the seat 50 is prevented from increasing in vehicle-widthwise size, and the ground reach is improved.

In the embodiments, the motorcycle 1 further comprises the footrests 36a and 36b for a rider's feet to be placed thereon, the footrests 36a and 36b are disposed more frontward than the frontmost end 50a of the seat 50 and more outward than the vehicle-widthwise leftmost end 50b and the vehicle-widthwise rightmost end 50c of the seat 50, and the first interlocking portions 88 and 98 are formed on the linear line connecting the footrests 36a and 36b and the middle position 51 with each other. As a result, the seat 50 is prevented from increasing in vehicle-widthwise size, and the ground reach is improved.

### REFERENCE SIGNS LIST

- 1: -- Motorcycle
- 14: -- Main frame
- 30: -- Body frame
- 32: -- Vehicle body cover
- 32a: -- Upper edge
- 36a, 36b: -- Footrest
- 40: -- Engine
- 45: -- Helmet
- 50: -- Seat
- 51: -- Middle position
- 55: -- Protruding portion
- 80: -- Storage box
- 81a: -- Front-half portion
- 81b: -- Rear-half portion
- 82: -- Front wall
- 85: -- Right wall
- 86: -- Right wall main portion
- 87: -- Right wall bulging portion
- 88: -- First interlocking portion
- 89: -- Second interlocking portion
- 90: -- Rear wall
- 95: -- Left wall
- 96: -- Left wall main portion
- 97: -- Left wall bulging portion
- 98: -- First interlocking portion
- 99: -- Second interlocking portion
- 100: -- Opening

## Claims

1. A motorcycle comprising:
a head pipe (12);
a body frame (30) having a main frame (14) extending rearward and obliquely downward from the head pipe (12);
an engine (40) supported non-swingably by the main frame (14) and disposed below the main frame (14);
a storage box (80) supported by the body frame (30) and disposed above the main frame (14) and the engine (40);
a seat (50) disposed behind the head pipe (12) and above the storage box (80); and
a vehicle body cover (32) disposed vehicle-widthwise outward of the storage box (80), wherein:
the seat (50) has a protruding portion (55) at least a portion of which is disposed outward of the storage box (80) and the vehicle body cover (32);
the storage box (80) has an opening (100) at its top portion, a wall unit defining the opening (100), and an interlocking portion connected to the wall unit, the interlocking portion extending outward of the vehicle body cover (32) over an upper edge (32a) of the vehicle body cover (32) and interlocking with the upper edge (32a) of the vehicle body cover (32), wherein the wall unit comprises a front wall (82), a right wall (85) extending rearward from a rightmost end of the front wall (82), a left wall (95) extending rearward from a leftmost end of the front wall (82), and a rear wall (90) connecting the right wall (85) and the left wall (95) to each other,
**characterized in that** the interlocking portion includes left and right first interlocking portions (88,98) and left and right second interlocking portions (89,99), the left and
right first interlocking portions (88,98) formed in a front-half portion (81 a) of the storage box (80), and the left and right second interlocking portions (89,99) formed behind the left and right
first interlocking portions (88,98) and each being a separate portion from the left and right first interlocking portions (88,98), and
the left and right first interlocking portions (88,98) and the left and right second interlocking portions (89,99) are formed on each of the right wall (85) and the left wall (95).

2. A motorcycle according to claim 1, **characterized in that** the left and right first interlocking portions (88,98) are formed in the front-half portion (81 a) of the storage box (80), and the left and right second interlocking portions (89,99) are formed in a rear-half portion (81 b) of the storage box (80).

3. A motorcycle according to claim 1 or 2, **characterized in that** the left wall (95) has a left wall main portion (96) and a left wall bulging portion (97), the left wall main portion (96) formed to have a horizontal cross section in a linear shape or in a leftward convex curved shape, and the left wall bulging portion (97) provided more rearward than a frontmost end of the left wall main portion (96) and more frontward than a rearmost end thereof and formed to have a horizontal cross section in a leftward convex curved shape having a greater curvature than that of the left wall main portion (96); and
the right wall (85) has a right wall main portion (86) and a right wall bulging portion (87), the right wall main portion (86) formed to have a horizontal cross section in a linear shape or in a rightward convex curved shape, and the right wall bulging portion (87) provided more rearward than a frontmost end of the right wall main portion (86) and more frontward than a rearmost end thereof and formed to have a horizontal cross section in a rightward convex curved shape having a greater curvature than that of the right wall main portion (86).

4. A motorcycle according to claim 3, **characterized in that** the left and right first interlocking portions (88,98) and the left and right second interlocking portions (89,99) are formed at respective locations on the left wall main portion (96) that are in front of and behind the left wall bulging portion (97), and also formed at respective locations on the right wall main portion (86) that are in front of and behind the right wall bulging portion (87).

5. A motorcycle according to one of the claims 1 to 4, **characterized in that** a lowermost end of the protruding portion (55) is disposed lower than upper edges of the left wall (95) and the right wall (85) of the storage box (80).

6. A motorcycle according to at least one of the claims 1 to 5, **characterized in that** at least one of the left and right first interlocking portions (88,98) and the left and right second interlocking portions (89,99) is inclined with respect to the vertical so as to slope downward toward vehicle-widthwise outside.

7. A motorcycle according to at least one of the claims 1 to 6, **characterized in that** the seat (50) is formed in such a shape that its width becomes narrower toward its front from a portion of the seat (50) at which its width is greatest; and
a middle position (51) between a frontmost end (50a) of the seat (50) and the portion of the seat (50) at which its width is greatest is located behind the left and right first interlocking portions (88,98) and in front of the left and right second interlocking portions (89,99).

8. A motorcycle according to claim 7, **characterized by** a footrest (36b) for a rider's foot to be placed thereon, wherein the footrest (36b) is disposed more frontward than the frontmost end (50a) of the seat (50) and more outward than a vehicle-widthwise leftmost end (50b) and a vehicle-widthwise rightmost end (50c) of the seat (50); and the left and right first interlocking portions (88,98) are formed on a linear line connecting the footrest (36b) and the middle position (51) with each other as viewed in plan.

## Patentansprüche

1. Ein Motorrad mit:
einem Kopfrohr (12);
einem Fahrzeug-Rahmen (30), der einen Haupt-Rahmen (14) hat, der sich nach hinten und schräg nach unten von dem Kopfrohr (12) erstreckt;
einem Motor (40) nicht-schwingend durch den Haupt-Rahmen (14) gelagert und unter dem Haupt-Rahmen (14) angeordnet;
einer Staubox (80), gelagert durch den Fahrzeug-Rahmen (30) und über dem Haupt-Rahmen (14) und dem Motor (40) positioniert;
einem Sitz (50), positioniert hinter dem Kopfrohr (12) und über der Staubox (80);
eine Fahrzeug-Aufbau-Abdeckung (32), positioniert in der Fahrzeugbreite nach außerhalb von der Staubox (80), wobei:
der Sitz (50) einen Vorsprungs-Abschnitt (55) hat, zumindest ein Abschnitt desselben ist außerhalb der Staubox (80) und der Fahrzeug-Aufbau-Abdeckung (32) positioniert;
die Staubox (80) eine Öffnung (100) an deren oberen Abschnitt hat, eine Wand-Einheit definiert die Öffnung (100), und ein Verriegelungs-Abschnitt ist mit der Wand-Einheit verbunden, der Verriegelungs-Abschnitt erstreckt sich nach außen von der Fahrzeug-Aufbau-Abdeckung (32) über eine obere Kante (32a) der Fahrzeug-Aufbau-Abdeckung (32) und verriegelt mit der oberen Kante (32a) der Fahrzeug-Aufbau-Abdeckung (32), wobei die Wand-Einheit eine vordere Wand (82), eine rechte Wand (85), die sich nach hinten von einem ganz rechten Ende der vorderen Wand (32) erstreckt, eine linke Wand (95), die sich nach hinten von einem ganz linken Ende von der vorderen Wand (32) erstreckt und eine hintere Wand (90), welche die rechte Wand (85) und die linke Wand (95) miteinander verbindend, umfasst,
**dadurch gekennzeichnet, dass** der Verriegelungs-Abschnitt rechte und linke erste Verriegelungs-Abschnitte (88, 89) und linke und rechte zweite Verriegelungs-Abschnitte (89, 99) beinhaltet, die linken und rechten ersten Verriegelungs-Abschnitte (88, 89) sind in einem vorderen Halb-Abschnitt (81 a) der Staubox (80) ausgebildet, und die linken und rechten zweiten Verriegelungs-Abschnitte (89, 99) sind hinter den linken und rechten ersten Verriegelungs-Abschnitten (88, 89) ausgebildet und jede ist ein separater Abschnitt von den linken und rechten Verriegelungs-Abschnitten (88, 89), und die linken und rechten ersten Verriegelungs-Abschnitte (88, 89) und die linken und rechten zweiten Verriegelungs-Abschnitte (89, 99) sind an jeder, der rechten Wand (85) und der linken Wand (95) ausgebildet.

2. Ein Motorrad gemäß Anspruch 1, **dadurch gekennzeichnet, dass** die linken und rechten ersten Verriegelungs-Abschnitte (88, 89) in einem vorderen Halb-Abschnitt (81 a) der Staubox (80) ausgebildet sind, und die linken und rechten zweiten Verriegelungs-Abschnitte (89, 99) sind in einem hinteren Halb-Abschnitt (81 b) der Staubox (80) ausgebildet.

3. Ein Motorrad gemäß Anspruch 1 oder 2, **dadurch gekennzeichnet, dass** die linke Wand (95) einen linken Wand-Haupt-Abschnitt (96) und einen rechten Wand-Ausbauchungs-Abschnitt (97) hat, der linke Wand-Haupt-Abschnitt (96) ist ausgebildet einen horizontalen Querschnitt in einer linearen Form oder in linksgerichteten konvex-gekrümmten Form zu haben, und der linke Wand-Ausbauchungs-Abschnitt (97) ist mehr nach hinten vorgesehen als ein vorderstes Ende des linken Wand-Haupt-Abschnitts (96) und mehr nach vorne als ein hinterstes Ende desselben und ist ausgebildet einen horizontalen Querschnitt zu haben in einer linksgerichteten konvex-gekrümmten Form die eine größere Krümmung hat als die des linken Wand-Haupt-Abschnitts (96); und
die rechte Wand (85) hat einen rechten Wand-Haupt-Abschnitt (86) und einen rechten Wand-Ausbauchungs-Abschnitt (87), der rechte Wand-Haupt-Abschnitt (86) ist ausgebildet einen horizontalen Querschnitt in einer linearen Form oder in einer rechtsgerichteten konvex-gekrümmten Form zu haben, und der rechte Wand-Ausbauchungs-Abschnitt (87) ist mehr nach hinten vorgesehen als ein vorderstes Ende des rechten Wand-Haupt-Abschnitts (86) und mehr nach vorne als ein hinterstes Ende desselben und ist ausgebildet einen horizontalen Querschnitt zu haben in einer rechtsgerichteten konvex-gekrümmten Form die eine größere Krümmung hat als die des rechten Wand-Haupt-Abschnittes (86).

4. Ein Motorrad gemäß Anspruch 3, **dadurch gekennzeichnet, dass** die linken und rechten ersten Verriegelungs-Abschnitte (88, 98) und die linken und rechten zweiten Verriegelungs-Abschnitte (89, 99) jeweils an Orten an dem rechten Wand-Haupt-Abschnitt (96) ausgebildet sind, die vor und hinter dem linken Wand-Ausbauchungs-Abschnitt (97) sind, und ebenso an jeweiligen Orten an dem rechten Wand-Haupt-Abschnitt (86) ausgebildet sind, die vor und hinter dem rechten Wand-Ausbauchungs-Abschnitt (87) sind.

5. Ein Motorrad gemäß einem der Ansprüche 1 bis 4, **dadurch gekennzeichnet, dass** ein unterstes Ende des Vorsprungs-Abschnitt (55) niedriger angeordnet ist als obere Kanten der linken Wand (95) und der rechten Wand (85) der Staubox (80).

6. Ein Motorrad gemäß einen der Ansprüche 1 bis 5, **dadurch gekennzeichnet, dass** zumindest einer der rechten und linken ersten Verriegelungs-Abschnitte (88, 98) und der linken und rechten zweiten Verriegelungs-Abschnitte (89, 99) mit Bezug zu der Vertikalen geneigt ist, so dass dieser nach unten abfällt der Fahrzeugbreite nach außen.

7. Ein Motorrad gemäß zumindest einen der Ansprüche 1 bis 6, **dadurch gekennzeichnet, dass** der Sitz (50) in so einer Form ausgebildet ist, dass dessen Breite enger wird zu dessen Vorderseite von einem Abschnitt des Sitz (50) an dem seine Breit am größten ist; und ein Mittel-Abschnitt (51) zwischen dem vordersten Ende (50a) des Sitz (50) und dem Abschnitt des Sitz (50) an dem dessen Breite am größten ist, ist hinter den linken und rechten ersten Verriegelungs-Abschnitten (88, 98) und vor den linken und rechten zweiten Verriegelungs-Abschnitten (89, 99) angeordnet.

8. Ein Motorrad gemäß Anspruch 7, **gekennzeichnet durch** eine Fußauflage (36b) für einen Fuß des Fahrers um darauf abgesetzt zu werden, wobei die Fußauflage (36b) weiter nach vorne positioniert ist als das vorderste Ende (50a) des Sitz (50) und weiter nach außen als ein der Fahrzeugbreite nach am weitesten linken Ende (50b) und einem der Fahrzeugbreite nach am weitesten rechten Ende (50c) des Sitz (50); und die linken und rechten ersten Verriegelungs-Abschnitte (88, 98) sind auf einer linearen Linie ausgebildet welche die Fußauflage (36b) und den Mittel-Abschnitt (51) miteinander verbindet wie in einer Draufsicht gesehen.

## Revendications

1. Motocyclette comprenant :
- un tube de tête (12) ;
- un corps de cadre (30) comprenant un cadre principal (14) s'étendant vers l'arrière et obliquement vers le bas depuis le tube de tête (12) ;
- un moteur (40) supporté sans balancement par le cadre principal (14) et disposé au-dessous du cadre principal (14) ;
- une boite de stockage (80) supportée par le corps de cadre (30) et disposée au-dessus du cadre principal (14) et du moteur (40) ;
- un siège (50) disposé derrière le tube de tête (12) et au-dessus de la boite de stockage (80) ; et
- un couverture de corps de véhicule (32) disposée suivant une largeur de véhicule à l'extérieur de la boite de stockage (80), dans laquelle :
- le siège (50) comporte une partie saillante (55) dont au moins une partie est disposée vers l'extérieur de la boite de stockage (80) et de la couverture de corps de véhicule (32) ;
- la boite de stockage (80) comporte une ouverture (100) à sa partie supérieure, une unité de paroi définissant l'ouverture (100), et une partie d'inter-verrouillage connectée à l'unité de paroi, la partie d'inter-verrouillage s'étendant vers l'extérieur de la couverture de corps de véhicule (32) par-dessus un bord supérieur (32a) de la couverture de corps de véhicule (32) et s'inter-verrouillant avec le bord supérieur (32a) de la couverture de corps de véhicule (32), dans laquelle l'unité de paroi comprend une paroi avant (82), une paroi droite (85) s'étendant vers l'arrière depuis une extrémité la plus à droite de la paroi avant (82), une paroi gauche (95) s'étendant vers l'arrière depuis une extrémité la plus à gauche de la paroi avant (82), et une paroi arrière (90) reliant la paroi droite (85) et la paroi gauche (95) l'une à l'autre,
- **caractérisée en ce que** la partie d'inter-verrouillage inclut de premières parties d'inter-verrouillage gauche et droite (88, 98) et de secondes parties d'inter-verrouillage gauche et droite (89, 99), les premières parties d'inter-verrouillage gauche et droite (88, 98) étant formées dans une demi-partie avant (81a) de la boite de stockage (80), et les secondes parties d'inter-verrouillage gauche et droite (89, 99) étant formées derrière les premières parties d'inter-verrouillage gauche et droite (88, 98) et chacune d'elles étant une partie séparée des premières parties d'inter-verrouillage gauche et droite (88, 98) ; et
- les premières parties d'inter-verrouillage gauche et droite (88, 98) et les secondes parties d'inter-verrouillage gauche et droite (89, 99) sont formées sur chaque paroi de la paroi droite (85) et de la paroi gauche (95).

2. Motocyclette selon la revendication 1, **caractérisée en ce que** les premières parties d'inter-verrouillage gauche et droite (88, 98) sont formées dans la demi-partie avant (81a) de la boite de stockage (80) et les secondes parties d'inter-verrouillage gauche et droite (89, 99) sont formées dans une demi-partie arrière (81b) de la boite de stockage (80).

3. Motocyclette selon les revendications 1 ou 2, **caractérisée en ce que** la paroi gauche (95) comporte une partie principale de paroi gauche (96) et une partie bombée de paroi gauche (97), la partie principale de paroi gauche (96) est formée pour avoir une section transversale horizontale en une forme linéaire ou en une forme incurvée convexe vers la gauche, et la partie bombée de paroi gauche (97) est disposée davantage en arrière qu'une extrémité la plus en avant de la partie principale de paroi gauche (96) et davantage en avant qu'une extrémité la plus en arrière de celle-ci et est formée pour avoir une section transversale horizontale en une forme incurvée convexe vers la gauche ayant une courbure plus importante que celle de la partie principale de paroi gauche (96) ; et
- la paroi droite (85) comporte une partie principale de paroi droite (86) et une partie bombée de paroi droite (87), la partie principale de paroi droite (86) est formée pour avoir une section transversale horizontale en une forme linéaire ou en une forme incurvée convexe vers la droite, et la partie bombée de paroi droite (87) est disposée davantage en arrière qu'une extrémité la plus en avant de la partie principale de paroi droite (86) et davantage en avant qu'une extrémité la plus en arrière de celle-ci et est formée pour avoir une section transversale horizontale en une forme incurvée convexe vers la droite ayant une courbure plus importante que celle de la partie principale de paroi droite (86).

4. Motocyclette selon la revendication 3, **caractérisée en ce que** les premières parties d'inter-verrouillage gauche et droite (88, 98) et les secondes parties d'inter-verrouillage gauche et droite (89, 99) sont formées à des emplacements respectifs sur la partie principale de paroi gauche (96) situés devant et derrière la partie bombée de paroi gauche (97) et sont également formées à des emplacements respectifs sur la partie principale de paroi droite (86) situés devant et derrière de la partie bombée de paroi droite (87).

5. Motocyclette selon l'une des revendications 1 à 4, **caractérisée en ce qu'**une extrémité la plus à gauche de la partie saillante (55) est disposée plus bas que des bords supérieurs de la paroi gauche (95) et de la paroi droite (85) de la boite de stockage (80).

6. Motocyclette selon au moins l'une des revendications 1 à 5, **caractérisée en ce qu'**au moins une des premières parties d'inter-verrouillage gauche et droite (88, 98) et des secondes parties d'inter-verrouillage gauche et droite (89, 99) est inclinée par rapport à la verticale de façon à former une pente vers le bas vers l'extérieur d'une largeur de véhicule.

7. Motocyclette selon au moins l'une des revendications 1 à 6, **caractérisée en ce que** le siège (50) est conformé en une forme telle que sa largeur devienne plus étroite vers son avant à partir d'une partie du siège (50) à laquelle sa largeur est la plus importante ; et
- une position médiane (51) entre une extrémité la plus en avant (50a) du siège (50) et la partie du siège (50) à laquelle sa largeur est la plus importante est située derrière les premières parties d'inter-verrouillage gauche et droite (88, 98) et devant les secondes parties d'inter-verrouillage gauche et droite (89, 99).

8. Motocyclette selon la revendication 7, **caractérisée par** un repose-pied (36b) pour qu'un pied d'un conducteur puisse être placé sur celui-ci, dans laquelle le repose-pied (36b) est disposé plus en avant que l'extrémité la plus en avant (50a) du siège (50) et davantage vers l'extérieur qu'une extrémité la plus à gauche dans une direction d'une largeur de véhicule ; et
- les premières parties d'inter-verrouillage gauche et droite (88, 98) sont formées sur une ligne linéaire reliant le repose-pied et la partie médiane l'une à l'autre sur une vue en plan.
